# EUROPEAN PATENT APPLICATION

(11) **EP 4 817 853 A1**
(43) Date of publication of application: **07.10.2026**
(21) Application number: 25167406.5
(22) Date of filing: 31.03.2025
(51) Int. Cl.: B29C 65/22, B29C 65/38, B29L 31/00, B29K 705/02

(54) **OFF-CENTERED IMPULSE WELDING BAND**

(71) Applicant: B. Braun Melsungen AG, 34212 Melsungen (DE)
(72) Inventor: LOEWENSBERG, Denis, 34212 Melsungen (DE)
(74) Representative: Maiwald GmbH

(57) **Abstract**

A sealing strip (1) for pulse sealing a port and film surfaces of a bag comprises a length (2) and a width (3), the sealing strip (1) further having a first and second high width areas (4, 5) and a reduced width area (6) positioned between the first and second high width areas (4, 5).

The width of the reduced width area (6) is lower than the width of the first and second high width areas (4, 5). Furthermore, the midpoint of the width of the reduced width area (6) does not match a line (7, 8) which is orthogonal to, and which crosses the midpoint of, the first and second high width areas (4, 5).

This asymmetrical sealing strip (1) allows more pressure and heat to be applied to the rigid section of the boat-shaped welding area of the port and less to its flexible section.

## Description

### Technical Field of the Invention

The invention relates to a sealing strip for pulse sealing of plastic films and ports for medical packs formed as a bag. Moreover, the invention relates to a sealing tool and a sealing method using the sealing strip for pulse welding. The invention furthermore relates to a packaging, which is preferably produced using the method according to the invention.

### Background of the Invention

Medical bags made from welded polymer films are widely used in the medical field for the safe containment and handling of medical fluids. These medical bags are typically formed by joining two or more polymer films through a welding process to create a sealed enclosure. Polyolefin films, particularly those comprising pure polyolefins, are commonly used due to their advantageous properties, including chemical resistance, mechanical strength, and compatibility with medical applications. Such medical bags are often enclosed within a barrier film to provide additional protection against environmental factors, ensuring sterility and product integrity throughout storage and use.

In many instances, medical bags incorporate ports to facilitate the introduction or removal of liquids. These ports are generally welded to the polymer films of the primary packaging. A port may take the form of a hose section or an injection-molded component and often includes a welded-in structure, commonly referred to as a *"boat",* which provides a stable interface between the port and the film. The accurate and reliable attachment of such ports is critical, as these areas are subjected to mechanical stresses and must maintain a secure and sterile connection.

Various techniques and devices for welding polymer films in the production of medical bags are known in the art. For example, EP 0 911 141 A2 discloses a device and method for welding polymer films using specialized welding jaws. These welding jaws feature a heated region for melting the films and an adjoining cooled region that remains in contact with non-plasticized film during the welding process. This configuration prevents the material of the weld seam from being displaced laterally and helps maintain the overall material thickness in the welded region. By ensuring that the welding jaws remain spaced apart by the film itself, the system provides consistent weld quality and dimensional stability.

Additionally, the welding of ports into medical bags is a well-established practice. EP 1 605 891 B1 describes a boat-shaped port welded between polymer films. Such welded-in ports are subject to stringent dimensional accuracy requirements due to their functional role in fluid transfer. Maintaining the integrity of the weld while accommodating potential variations in the shape and size of the port is a persistent challenge in the field.

To address these challenges, EP 3 600 853 B1 proposes a welding strip design wherein the sealing surface is increased on the outer regions of the strip while the width is recessed in the middle portion, while the shape of the strip is kept symmetric. This specific shape compensates for dimensional and shape tolerances in the port or other objects being welded. By varying the sealing surface geometry, the system allows for more uniform pressure distribution across the weld area, thereby improving the quality and reliability of the weld, particularly in regions where ports are integrated.

### Summary of the Invention

Despite these advancements, several disadvantages remain with the use of symmetrical impulse welding strips, particularly when welding ports to medical bags. One significant issue arises from the asymmetric geometry of the port base. Typically, the side of the port base facing the inner cavity of the bag is more open and flexible than the opposite side, which holds the connection features. During welding, the symmetrical impulse welding strip at least partially rests on this more flexible side, leading to uncertain contact between the strip and the port base. This uncertain contact reduces the heat transfer efficiency to the port base, causing localized overheating of the impulse band. Such overheating increases the risk of puncturing the polymer film at the edge of the band, contributing to approximately 3% of the production scrap rate and increasing manufacturing costs. In the worst case, such punctures could lead to leaks between the polymer film and the base of the port.

Moreover, the shape of the symmetrical impulse welding strip restricts its ability to be repositioned onto the more rigid side of the port base, which could otherwise provide a more stable welding surface. This limitation necessitates the use of reinforcing ribs to minimize deformation of the port base during welding. However, incorporating such ribs increases the complexity of the injection mold design, further adding to manufacturing costs. As a result, there remains a need for an improved impulse welding strip design that enhances contact stability, reduces localized overheating, and simplifies the port structure, thereby improving production efficiency and reducing costs.

The object of the present invention is to provide an improved impulse welding strip that overcomes the disadvantages of the prior art. In particular, the invention aims to:
Hence, it is an object of the present invention to provide an improved impulse welding strip that can reduce localized overheating of the weld between the polymer film and the base of the port by the impulse band and thereby can minimize the risk of puncturing the polymer film and of leakage formation.

It is another object of the present invention to provide an improved impulse welding strip that eliminates the need for reinforcing ribs in the base of the port, thereby simplifying the injection mold design and reducing manufacturing costs.

Finally, it is another object of the present invention to provide a more efficient and reliable welding process for medical bags, particularly in regions where ports are integrated, improving overall production efficiency and product quality.

It has now surprisingly found that above-mentioned objects are achieved by a sealing strip for pulse sealing a port and film surfaces of a bag,
wherein the sealing strip comprises a length dimension and a width dimension,
wherein the sealing strip comprises a first high width area and a second high width area,
and wherein the sealing strip comprises a reduced width area positioned between the first high width area and the second high width area,
wherein the average width of the reduced width area is lower than the average width of the first high width area and/or lower than the average width of the second high width area, and
wherein the midpoint of the average width of the reduced width area does not match a line, which is orthogonal to the average width of the first high width area and which crosses the midpoint of the average width of the first high width area, and/or does not match a line, which is orthogonal to the average width of the second high width area and which crosses the midpoint of the average width of the second high width area.

Furthermore, it has been surprisingly found out that above-mentioned objects are achieved by a sealing tool for pulse sealing a port and film surfaces of a bag, the sealing tool comprising two jaws with a sealing strip according to the present invention extending along the jaw.

Moreover, it has been surprisingly found out that above-mentioned objects are achieved by a use of the sealing strip or a sealing tool according to the present invention for producing a bag comprising at least one port.

Additionally, it has been surprisingly found out that above-mentioned objects are achieved by a pulse sealing method for pulse sealing film surfaces and a port of a packaging, wherein the method comprises the steps of:
- in a *positioning step* positioning a port between two films,
- in a *pressing step* pressing a jaw comprising a sealing strip according to the preceding invention onto the films, whereby a part of the films is in direct contact with each other forming a film seam part and another part of the films is in indirect contact via the port with each other forming a port seam part,
- in a *heating step* heating the sealing strip to seal the film seam part and the port seam part,
wherein the reduced width area of the sealing strip at least partially covers the port seam part and wherein the first high width area and/or the second high width area at least partially covers the film seam part.

It has been further surprisingly found out that above-mentioned objects are achieved by a packaging, preferably medical packaging, obtainable by the method according to the present invention.

Finally, it has been surprisingly found out that above-mentioned objects are achieved by a product comprising a medical packaging according to the present invention, wherein the packaging is filled with

The present invention provides several advantages over the prior art. By allowing the sealing strip to rest on the most rigid area of the port base, the invention significantly improves the welding contact between the sealing strip, the polymer film, and the port base. This improved contact ensures more homogeneous heat transfer, which reduces the occurrence of hot spots and effectively prevents film punctures. Furthermore, the sealing strip and the resulting seam can be precisely aligned with the external contour seam edge of the films, enhancing the seal strength and reducing the risk of accidental peeling while simultaneously minimizing material consumption.

Another advantage of the present invention lies in the simplification of the port design. The improved impulse welding strip eliminates the need for reinforcing ribs or allows for a simplified rib structure, which reduces the complexity of the injection mold design and leads to lower manufacturing costs. Additionally, the invention facilitates a reduction in the width of the port base's boat-shaped welding area where the impulse band rests. This narrower welding area decreases the amount of raw material required for the port, contributing to overall material savings.

Moreover, the improved welding stability and the reduced need for complex port features streamline the manufacturing process. This leads to faster production cycles, increased operational efficiency, and a significant reduction in the scrap rate. Together, these advantages provide a more reliable and cost-effective method for producing medical bags, particularly in regions where ports are integrated, while ensuring consistent weld quality and mechanical integrity.

### Brief Description of the Figures

- Figure 1: is a schematic drawing of the shape of a preferred embodiment of the sealing strip according to the present invention.
- Figure 2: is a schematic representation of the sealing tool including the sealing strip during a sealing process according to the present invention
- Figure 3: is a schematic drawing of the shape of a preferred embodiment of the sealing strip according to the present invention in combination with a boat-shaped port.
- Figure 4: is a schematic drawing of the shape of the sealing strip according to Figure 4 with a different angle of the transition area.
- Figure 5: is a schematic drawing of the shape of the boat-shaped port according to Figure 4 with an indication of the starting point of the transition area.
- Figure 6: is a schematic drawing of the shape of two sealing strips according to Figure 4 with a different angle of the transition area.
- Figure 7: is a schematic drawing of the shape the sealing strip according to Figure 4 with an indication of the outflow of the molten polymer.
- Figure 8: is a schematic drawing of the shape of two sealing strips according to Figure 4 with a different angle of the transition area.
- Figure 9: is a schematic drawing of the shape of a preferred embodiment of the sealing strip according to Figure 4, wherein the port has chamfers.
- Figure 10: is a schematic drawing of the shape of a preferred embodiment of the sealing strip according to Figure 9, wherein the sealing strip has a recess at the top, i.e. the problematic corner moved to the top.
- Figure 11: is a schematic drawing of the shape of a preferred embodiment of the sealing strip according to Figure 4, wherein the boat-shaped port has only a chamfer at the bottom and the sealing strip has a recess in the middle.
- Figure 12: is a schematic drawing of the shape of a preferred embodiment of the sealing strip according to Figure 9 with a different angle of the transition area.
- Figure 13: is a schematic drawing of the shape of a preferred embodiment of the sealing strip according to Figure 4, wherein the port rounded edges.

### Reference signs

- **1**: sealing strip
- **2**: length dimension of the sealing strip (1)
- **3**: width dimension of the sealing strip (1)
- **4**: first high width area of the sealing strip (1)
- **5**: second high width area of the sealing strip (1)
- **6**: reduced width area of the sealing strip **(1)**
- **7**: line, which is orthogonal to the average width of the first high width area **(4)** and which crosses the midpoint of the average width of the first high width area **(4)**
- **8**: line, which is orthogonal to the average width of the second high width area **(5)** and which crosses the midpoint of the average width of the second high width area **(5)**
- **9**: one end of the sealing strip **(1)**
- **10**: first transition area between the first high width area **(4)** and the reduced with area **(6)**
- **11**: second transition area between the second high width area **(5)** and the reduced with area **(6)**
- **12**: linear edge of the first transition area **(10)**
- **13**: angle between the edge **(12)** and a line parallel to an edge **(14)** of the reduced width area **(6)**
- **14**: edge of the reduced width area **(6)**
- **15**: linear edge of the second transition area **(11)**
- **16**: angle between the edge **(15)** and a line parallel to an edge **(14)** of the reduced width area **(6)**
- **17**: PTFE-coated glass cloth
- **18**: sealing tool
- **19**: two jaws
- **20**: rubber band
- **21**: protection plate
- **22**: cooling gap
- **23**: second cooling gap
- **24**: small gap

### Definitions

The term *"sealing"* as used herein denotes the process of cohesively bonding, in particular of plastics, primarily for the production of packaging composed of thermoplastic materials such as plastic films or film composites, such as, for example, plastic films coated with metallic and nonmetallic materials, thermoplastic-coated metal films such as aluminum film and the like, for example during the production of tubular bags, the closing of containers, for example by applying a seal made of plastic film with or without an aluminum coating, plastic-coated aluminum film, or other thermally weldable materials to containers composed of plastic with or without a coating or composed of aluminum with a plastic coating, or the sealing of films or film composites of the type mentioned above.

The term *"welding"* as used herein denotes thermal welding of liquid-tight film comprising a polymer material. In this process, at least two liquid-tight films comprising a polymer material are heated until at least the glass transition temperature is reached and the polymer in these areas begin to become liquid or at least low viscous. By simultaneous or subsequent mechanical pressing of these areas, the polymers are mixed together at this point and, after cooling and solidification, form a fixed joint called a seam. The seam can be permanent or a rupturable seam. The latter is advantageous in case the bag should be openable at the seam.

The term *"pulse sealing"* as used herein denotes a sealing technique to join thermoplastic materials by applying short, controlled pulses of electrical energy to a resistive heating element (such as a metal strip or wire). This heating element generates heat through electrical resistance, which melts the contacting surfaces of the thermoplastic materials. Once the desired melting point is reached, the electrical impulse is stopped, and the materials are allowed to cool under pressure, forming a solid and durable seam.

The term *"seam"* as used herein denotes an area of at least two connected walls including at least one edge of each wall, of a bag, at which the two walls are connected by sealing, thereby forming a seam area, a seam edge, and an inner boundary of the edge.

The term *"seam width"* as used herein denotes the distance between the seam edge and the inner boundary of the seam in a direction perpendicular to the seam edge. Usually, the seam width is substantially homogeneous, i.e., does not vary in the direction of the seam edge. However, variation of the seam width can be part of the overall design of the bag.

The term *"seam thickness"* relates to the thickness of the combined thicknesses of the walls connected in the seam.

The term *"liquid-tight"* as used herein denotes a quality of an object to function as a barrier for a liquid, preferably for a water-based liquid.

The term *"barrier layer"* as used herein denotes a material, which can slow down the process of oxygen permeation. Preferably, it comprises, more preferably consists of, a based barrier material, most preferably ethylene-vinyl alcohol (EVOH), or a metal oxide material, most preferably a silicon oxide layer or an aluminum oxide layer. Such barrier layer can require a supporting or binding layer to adhere to the liquid-tight film of the bag, such as in particular the EVOH layer. Metal oxide-based layers can be deposited directly onto the polymer material (e.g., by chemical vapor deposition).

The term *"wall"* as used herein denotes the flexible or rigid surfaces (sides, bottom, and sometimes the top) that define the boundaries of the bag, in particular the inner cavity of the bag. Usually, the walls are connected to each other i.e., by gluing or sealing, to form a liquid-tight cavity. The walls might hold further equipment, such as a port. The walls might be rigid or flexible. Preferably, the walls are flexible.

The term *"inner cavity"* as used herein denotes a space, which is defined by the bag, in particular by the walls and their connections. In certain cases, also other parts of the bag might additionally define the inner cavity. For example, if a port is included in a connection, it also contributes to the definition of the inner cavity.

The term *"polymer"* as used herein denotes an organic polymer, preferably a polymer selected from polyolefins, polyethylene terephthalate, polystyrene, polyvinyl chloride, or mixtures thereof, more preferably a polyolefin selected from the list consisting of polyethylene, polypropylene, or mixtures thereof.

The term *"additive"* as used herein denotes further components, which can be present in polymer compositions to modify their physical properties. Examples of additives are antioxidant(s), stabilizer(s), such as process stabilizers and UV stabilizers, acid scavenger(s), metal deactivators, crosslinking agents, such as free radical generating agent(s), e.g., organic peroxide(s), scorch retarder(s), crosslinking booster(s), processing aid(s), flame retardant additive(s), water tree retardant additive(s), inorganic filler(s), and voltage stabilizer(s). These groups of additives and the individual additive compounds therein are usually well known in the polymer field.

The term *"port"* as used herein denotes an insert which is rigid, and which defines the pathways for introducing or removing material in a bag. A port can have more than one of these pathways. Hence, for example, ports having two pathways are usually called twinports, whereas ports having only one pathway are usually called monoports. Typically, ports are formed as prisms having curvilinearly shaped bases. Most commonly, the curvilinearly shaped bases are circles for monoports and ovals, preferably ellipses for twinports. For both monoports and twinports also pointed ovals, preferably pointed symmetric ovals, are used.

The term *"curvilinearily shaped"* or *"curvilinear shape"* as used herein denotes a shape, which comprises smooth curves. The shape may also comprise pointed ends as long as the transitions between these pointed ends are curvilinear.

The term *"boat-like shaped"* as used herein denotes the shape of a port, which has a pointed oval, preferably a pointed symmetric oval, as curvilinearly shaped base for its prism shape.

The term "*C₂ symmetry"* as used herein denotes a type of rotational symmetry characterized by the presence of a single twofold rotational axis. An object exhibiting C₂ symmetry remains invariant under a rotation of 180 degrees (π radians) about this axis. This symmetry group, also known as a cyclic group of order two, is commonly associated with objects that exhibit bilateral symmetry when rotated halfway around the specified axis.

### Detailed Description of the Invention

As set out above, the present invention relates to a sealing strip. The sealing strip can be used for producing a bag comprising at least one port. Furthermore, the sealing strip is usually used in a sealing tool, which itself is used in a sealing method. In such a sealing method a packaging is produced, preferably a medical product. Hence, these subject matters are described in detail in the following section.

### Sealing Strip

The most general embodiment of the sealing strip according to the present invention is a sealing strip **(1)** for pulse sealing a port and film surfaces of a bag, wherein the sealing strip **(1)** comprises a length **(2)** dimension and a width **(3)** dimension, wherein the sealing strip **(1)** comprises a first high width area **(4)** and a second high width area **(5),** and wherein the sealing strip **(1)** comprises a reduced width area **(6)** positioned between the first high width area **(4)** and the second high width area **(5),** wherein the average width of the reduced width area **(6)** is lower than the average width of the first high width area **(4)** and/or lower than the average width of the second high width area **(5),** and wherein the midpoint of the average width of the reduced width area **(6)** does not match a line **(7),** which is orthogonal to the average width of the first high width area **(4)** and which crosses the midpoint of the average width of the first high width area **(4),** and/or does not match a line **(8),** which is orthogonal to the average width of the second high width area **(5)** and which crosses the midpoint of the average width of the second high width area **(5).** The result of the requirement of the midpoint of the average width of the reduced width area **(6)** not matching lines **(7)** and/or not matching line **(8)** is that the sealing strip does not have C₂ symmetry along the length dimension **(2).** The main advantage of such asymmetry is that the sealing strip **(1)** can be used in a way that a flexible side of a port to be welded to a polymer film receives less pressure than the more rigid side. As an effect, the pressure between the sealing strip **(1)** and the port is reliably provided resulting in constant seam strength, less punctures and reduced leakage formation.

The material of the sealing strip must be able to carry out pulse sealing. Hence, the material must be an electric conductor and provide a respective resistance to provide heat. Furthermore, the material must withstand pressure and tension during the sealing process.

Hence, generally, the material of the sealing strip **(1)** is a metal or a metal alloy. Preferred metals are selected from the list consisting of nickel, chromium, iron, aluminum, copper, molybdenum, and alloys therefrom. Particularly preferred materials for the sealing strip **(1)** are nichrome (nickel-chromium alloy), kanthal (iron-chromium-aluminum alloy), stainless steel, copper alloys (such as phosphor bronze, beryllium copper), and molybdenum or molybdenum alloys.

Preferably, the first high width area **(4),** the second high width area **(5),** and/or the reduced width area **(6)** of the sealing strip **(1)** have constant widths. In such cases, the width of these areas does not vary along the length dimension **(2)** of the sealing strip. Thus, preferably, the width of the reduced width area **(6)** of the sealing strip **(1)** has the same value in each point in length **(2)** direction. Likewise, preferably, the width of the first high width area **(4)** has the same value in each point in length **(2)** direction and/or the width of the second high width area **(5)** has the same value in each point in length **(2)** direction. Constant widths of these areas have the advantage that also the width of the seam formed by such a preferred sealing strip is constant. Thereby, sealing quality is assured. However, it should be noted that specific port shapes might require varying widths i.e. of the reduced width area **(6),** for example if the port has specific features reaching into the welding area.

More preferably, the midpoint of the average width of the reduced width area **(6)** does not match a line **(7),** which is orthogonal to the average width of the first high width area **(4)** and which crosses the midpoint of the average width of the first high width area **(4)** and the midpoint of the average width of the reduced width area **(6)** does not match a line **(8),** which is orthogonal to the average width of the second high width area **(5)** and which crosses the midpoint of the average width of the second high width area **(5).** This ensures, that both relations, i.e. the relation between the first high width area **(4)** and the reduced width area **(6)** and the relation between the second high width area **(5)** and the reduced width area **(6)** are non-symmetrical, further enhancing the effect of the sealing strip **(1)** of the present invention.

Preferably, in the sealing strip **(1)** according to the present invention the first high width area **(4)** includes one end **(9)** of the sealing strip **(1)** in length **(2)** direction and the second high width area **(5)** includes the other end **(9')** of the sealing strip **(1)** in length **(2)** direction. Usually, electrical connections are located at the one end **(9)** and on the other end **(9')** of the sealing strip **(1)** and are designed in a manner known per se. Typically, these electrical connections are used to flow an electric current through the sealing strip **(1)** thereby creating the heat dissipated to the parts to be welded. Furthermore, preferably, the ends **(9, 9')** of the sealing strip **(1)** in length direction **(2)** are connected to fixing areas for fixing the sealing strip **(1)** to a sealing tool **(18).** Most preferred, the electrical connections and the fixing areas are identical.

Preferably, the average width of the first high width area **(4)** and the width of the second high width area **(5)** have the same value. This ensures that the seams created between the polymer films left and right of the port have the same dimensions. This is in particular preferred if the port to be welded has a symmetrical shape.

Further, more preferably, the line **(7)** orthogonal to the average width of the first high width area **(4)** and crossing the midpoint of the average width of the first high width area **(4)** is identical to the line **(8)** orthogonal to the average width of the second high width area **(5)** and the width of the second high width area **(5)** have the same value. In such a situation, the sealing strip has C₂ symmetry in width dimension **(3),** but not in length dimension **(2).** As a result, it asserts most homogenous pressure on a symmetrical port without provided too much pressure to the flexible side of the port. It should be understood that the sealing strip **(1)** is used in such a situation in that the side of the sealing strip having a smaller distance between the edges of the reduced width area **(6)** and the high width areas **(4, 5)** is pointing towards the rigid side of the port.

Even more preferably, one edge in length direction of the first high width area **(4)** matches one edge in length direction of the reduced width area **(6)** and/or one edge in length direction of the second high width area **(5)** matches one edge in length direction of the reduced width area **(6).** Most preferably, one edge in length direction of the first high width area **(4)** matches one edge in length direction of the reduced width area **(6)** and one edge in length direction of the second high width area **(5)** matches one edge in length direction of the reduced width area **(6).** Also most preferably, the edges of the first **(4)** and the second high width area **(5)** matching an edge of the reduced width aera **(6)** match the same edge of the reduced width area **(6).** In such a shape, the sealing strip **(1)** forms one straight edge at one side along the length dimension **(2).** This has the advantage that most of the pressure can be applied to the rigid side of the port. Furthermore, the seam can be provided in a way to directly match a specific linear border of the port and at the same time seal the polymer films directly at their edges.

In a preferred embodiment of the present invention, the sealing strip **(1)** further comprises a first transition area **(10)** between the first high width area **(4)** and the reduced with area **(6)** and/or a second transition area **(11)** between the second high width area **(5)** and the reduced with area **(6).** Preferably, the average width of the reduced width area **(6)** is lower than the average width of the first high width area **(4)** and the width of the first transition area **(4)** is reduced in length **(2)** direction from the first high width area **(4)** to the reduced width area **(6).** Likewise, preferably, the average width of the reduced width area **(6)** is lower than the average width of the second high width area **(5)** and the width of the first transition area **(4)** is reduced in length **(2)** direction from the second high width area **(5)** to the reduced width area **(6).**

The reduced width of the reduced width band **(6)** has the effect of a higher temperature dissipated on the polymer film. This is due to the higher resistance provided by the lower area of the cross-section of the reduced width band **(6).** The reduced width band **(6)** is chosen to match the surface of the polymer film, which is in contact with the port. Usually, higher temperatures are needed to provide a good sealing between the port and the polymer film. This is required by the material usually used by the port, but also by the fact that two films usually have a lower thickness than a film and wall of a port. Moreover, when the film is welded to the port, the heat is provided by only one welding head per welding. Conversely, when the two films are welded together, the heat is provided by two welding heads (upper and lower). Furthermore, the transition areas have the technical effect that the temperature at the edges of the port and at the transition from a port-film seam to a film-film seam can be adjusted, i.e. lowered when going from the reduced width area **(6)** to one of the high width areas **(4, 5).**

Generally, the transition areas **(10, 11)** can have any form, as long as the width of the transition area is reduced in length **(2)** direction from the high width area to the reduced width area **(6).** Thereby, this reduction shall be understood that the width of the transition area might be constant for a certain length or might even increase again, as long as it finally is reduced to the width of the reduced width area **(6).** Preferably, the width of the transition area follows a monotonically decreasing function along the length of the transition area **(10, 11)** from the high width area **(4, 5)** to the reduced width area **(6).** More preferably, the width of the transition area follows a strictly monotonically decreasing function along the length of the transition area **(10, 11)** from the high width area **(4, 5)** to the reduced width area **(6).** Most preferably, the width of the transition area follows a linearly decreasing function along the length of the transition area **(10, 11)** from the high width area **(4, 5)** to the reduced width area **(6).**

The shape of the transition area ideally should follow the shape of the port at its edged, i.e. at the transition from the starting point of the port up to a point where the ports inner cavity is opening up. This is at best illustrated with a boat-shaped port, the cross-section of which has the shape of a pointed oval, preferably a pointed symmetric oval. Hence, the transition area of the port starts from the pointed point of the oval and ends at the point where the wall of the port splits up into two walls. This area is ideally followed by the transition area **(10, 11)** of the sealing strip **(1).** Thereby, the function of the width of the transition area **(10, 11)** along the length dimension **(2)** of the sealing strip **(1)** preferably follows an inverse function to the function of the thickness of the transition area of the port along the length dimension **(2)** of the sealing strip **(1).**

Hence, most preferably, the width of the first transition area **(10)** of the sealing strip **(1)** is linearly reduced, thereby forming at least one linear edge **(12)** of the first transition area **(10).** Likewise, most preferably, the width of the second transition area **(11)** is linearly reduced, thereby forming at least one linear edge **(15)** of the second transition area **(11).**

However, the linear function can have different slopes, which effectively define the angles between the edges **(12, 15)** of the transition areas **(10, 11)** to the edge **(14)** of the reduced area **(6),** preferably the reduced area **(6)** having a constant width. These angles define how quick the temperature is raised in the sealing strip **(1)** when going from the reduced width area **(6)** to the high width areas **(4, 5).**

Preferably, the angle **(13)** between the edge **(12)** of the first transition area **(10)** and a line parallel to an edge **(14)** of the reduced width area **(6)** is in the range of from 20 to 60°, preferably 25 to 55°, and more preferably 40 to 50°. Likewise, preferably, the angle **(16)** between the edge **(15)** of the second transition area **(11)** and a line parallel to an edge **(14)** of the reduced width area **(6)** is in the range of from 20 to 60°, preferably 25 to 55°, and more preferably 40 to 50°.

In the sealing strip **(1)** according to the present invention, the average width of the reduced width area **(6)** is preferably in the range of from 40 to 90% of the average width of the first **(3)** and/or second high width area **(5),** more preferably 50 to 85%, still more preferably 60 to 80%, even more preferably 65 to 75%, and most preferably 68 to 72%. In order to reliably prevent direct contact between the sealing strip **(1)** and the polymer film to be sealed, a non-stick cloth **(17)** is provided. The non-stick cloth **(17)** spans the sealing strip **(1)** and is detachably fastened. Preferably, the material of the non-stick cloth **(17)** is polytetrafluoroethylene (PTFE), which is both inert and temperature resistant. Hence, preferably, the sealing strip **(1)** is at least partially covered by a PTFE-coated glass cloth **(17),** preferably wrapped in a PTFE-coated glass cloth **(17).** Most preferably, the PTFE-coated glass cloth **(17)** is at least partially glued to the surface of the seal strip to prevent any displacement.

As an alternative, the surface of the sealing strip **(1)** could at least be partially coated with perfluoroalkoxy alkane (PFA). However, in comparison to the PFTE cloth, this solution has the drawback that tearing of the film, especially in the transition area, can be observed.

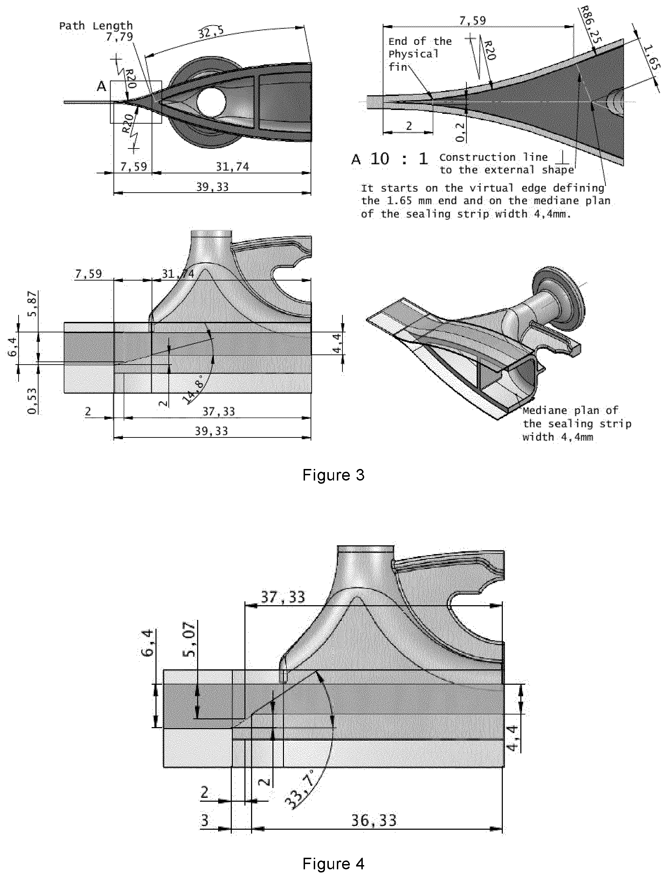

In a second preferred embodiment of the sealing strip (1) of the present invention, the sealing strip is in particular suitable for sealing a boat-shaped port, specifically a symmetric boat-shaped twin-port according to Figure 3. In this embodiment, the transition area **(10, 11)** should be described in more detail.

In this preferred embodiment, the transition area **(10, 11)** starts at the earliest at a point, which represents the cross-section of two lines defined by the inner walls of the port (cf. Figure 3, top right) and stops at a point defined by the virtual crossing of two lines of the fin external shape forming an angle of around 14.8° (cf. Figure 3, bottom left) where the high width area **(4, 5)** starts. If the transition area **(10, 11)** starts earlier, the sealing between the polymer film and the port will be too weak in this area.

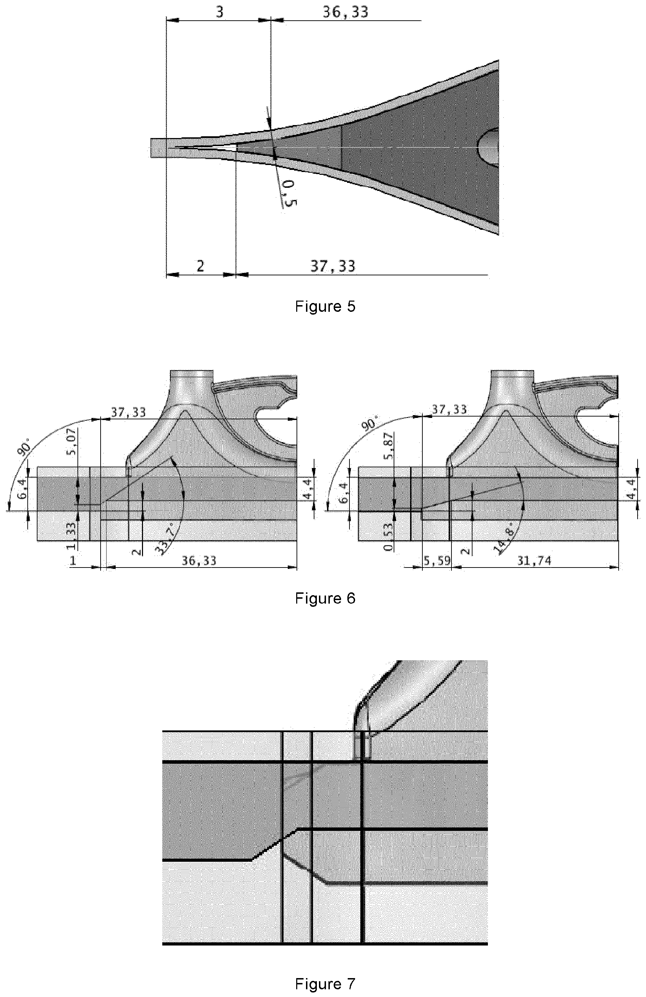

Nevertheless, it is not necessary that the transition area **(10, 11)** already starts at this point, it can also start later in length direction **(2)** towards the high width area **(4, 5)** and stops at the point as previously defined forming an angle of around 33.7° (cf. Figure 4). This starting point can be even calculated from heat equations: $Q = m * c * ΔT$ (1) $Φ = A * \left(λ/s\right) * ΔT$ (2) These equations allow the determination of the dimension "s", which is in the present embodiment 0.5 mm (cf. Figure 5).

However, usually, the ends of the fins are not finished having no thickness, as this would increase manufacturing costs. For this reason, the fins preferably end earlier, which means that the high width area **(4, 5)** starts also earlier at the fins end without changing the angles previously defined (cf. Figure 6).

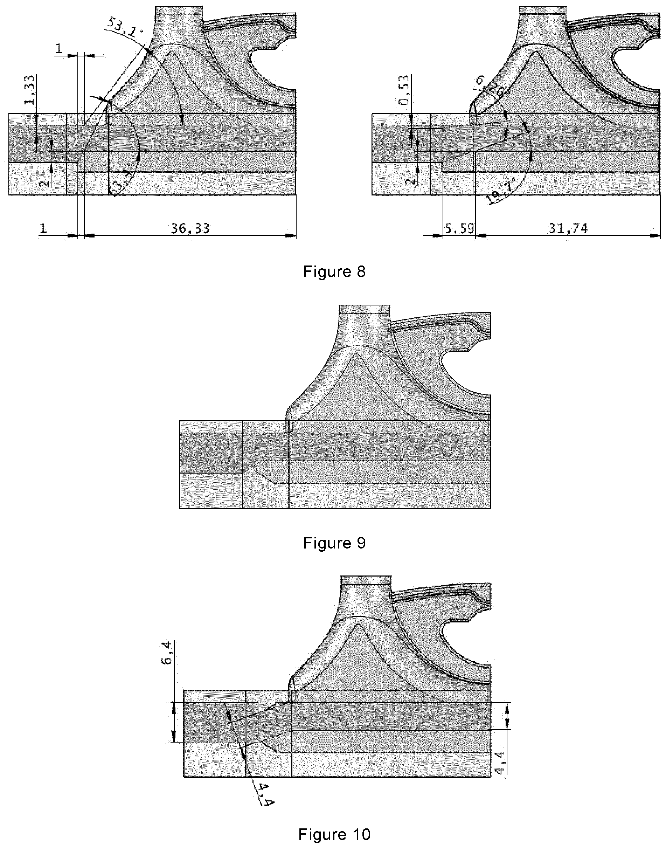

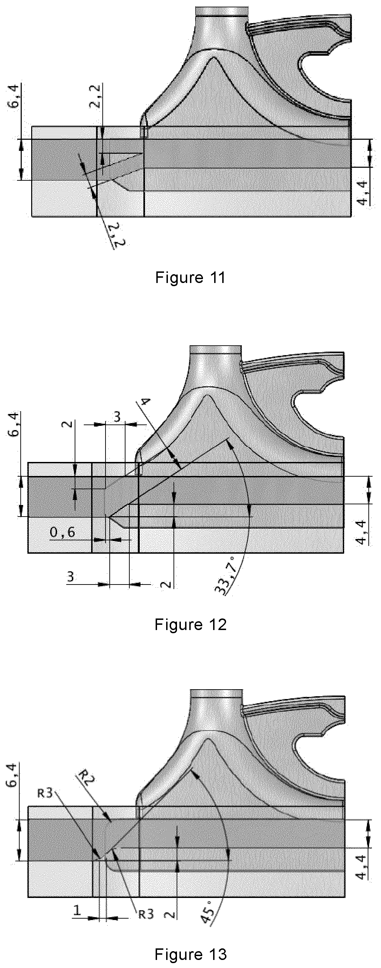

However, such a geometry shows an index jump in width at the end of the fin creating a corner on the sealing strip **(1)** having an angle of 90° which could lead to puncture of the film, what should be avoided. Therefore, various solutions are provided:
a) The transition areas **(10, 11**) end at the corner of 90° previously defined (cf. Figure 8). To guarantee the molten state in order to avoid any channel which could create leakage between films at the end of the port, chamfers are added on the fins. As another advantage, these chamfers can receive excess material flowing into the outer chamfer (cf. Figure 7),
b) The transition areas are extended on the films (cf. Figure 9),
c) The problematic corner is moved to the outer area of the bag (cf. Figure 10); or
d) A recess is created in the middle of the sealing strip (cf. Figure 11). Hence, preferably the first high width area **(4)** and/or the second high width area **(5)** comprises a recess in length **(2)** direction, preferably centered around the midpoint of the average width of the first (3) and/or second high width area **(5).** Additionally, and preferably, in all of these options, the corners are preferably be radiated, especially the corners closer to the inner cavity.

More preferably, the angle **(13, 16)** of the transition area **(10, 11)** is equal or bigger than the angle of the outer chamfer (cf. Figure 12). This ensures that the temperature is punctually increased to keep the molten state of the material at the edge of the port.

Finally, preferably, any edges of the port could be rounded (cf. Figure 13) to reduce puncture risk of the films, especially the corner of the fins located into the chamber which should be bigger as possible.

### Sealing Tool

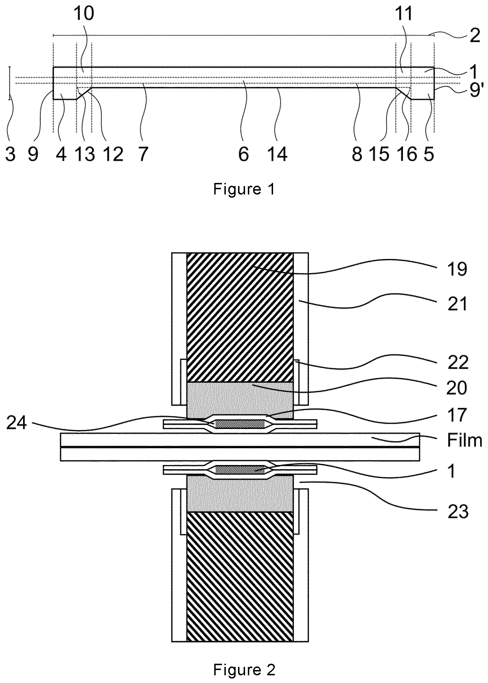

The present invention further concerns a sealing tool **(18)** for pulse sealing a port and film surfaces of a bag, the sealing tool **(18)** comprising two jaws **(19)** with a sealing strip **(1)** according to the present invention extending along the jaw **(19).** An example of the sealing tool is presented in Figure 2.

Preferably, the sealing strip **(1)** is in touch with the jaw **(19)** via a rubber band **(20).** The rubber band is able to absorb and distribute pressure. Furthermore, it also works as an insulating material.

The jaw **(19)** preferably comprises a protection plate **(21)** positioned at the surface of the jaw **(19).** More preferably, the sealing tool **(18)** comprises a cooling gap **(22)** between the jaw **(19)** and the protection plate **(21)** positioned an end of the jaw **(19)** extending towards the sealing strip **(1).** Cooling fluid can be applied thereto or lead therethrough to reduce the risk of overheating.

Additionally, preferably, the sealing tool **(18)** comprises a second cooling gap **(23)** between the protection plate **(21)** and the sealing strip **(1).** This second cooling gap assures that the polymer film surrounding the seam to be sealed will not be affected, i.e. deformed, by heat radiation.

In case the sealing strip **(1)** is at least partially covered by a PTFE-coated glass cloth **(17),** preferably wrapped in a PTFE-coated glass cloth **(17),** the sealing tool **(18)** further comprises a small gap **(24)** between the sealing strip **(1)** and the cloth **(17),** preferably between one end **(9)** of the sealing strip **(1)** and the cloth **(17)** and/or between the other end **(9')** of the sealing strip **(1)** and the cloth **(17).** This small gap helps to define the edges of the seam to be sealed more precisely.

### Pulse Sealing Method

Furthermore, the present invention concerns a pulse sealing method for pulse sealing film surfaces and a port of a packaging, wherein the method comprises the steps of:
- in a *positioning step* positioning a port between two films,
- in a *pressing step* pressing a jaw **(19)** comprising a sealing strip **(1)** according to the present invention onto the films, whereby a part of the films is in direct contact with each other forming a film seam part and another part of the films is in indirect contact via the port with each other forming a port seam part,
- in a *heating step* heating the sealing strip **(1)** to seal the film seam part and the port seam part,
wherein the reduced width area **(6)** of the sealing strip **(1)** at least partially covers the port seam part and wherein the first high width area **(4)** and/or the second high width area **(5)** at least partially covers the film seam part.

It should be noted that the coverage of the port by the reduced width area **(6)** and the transition areas **(10, 11)** follow the information given above for the sealing strip **(1).**

Preferably, the method according to the present invention comprises prior to the positioning step a *selection step* of selecting the sealing strip to match the geometry of the port.

Preferably, in the method according to the present invention, the reduced width area **(6)** of the sealing strip **(1)** is entirely in contact with the port seam part and the first high width area **(4)** and the second high width area **(5)** are entirely in contact with the film seam part.

Also preferably, in the method according to the present invention, the sealing strip **(1)** further comprises a first transition area **(10)** between the first high width area **(4)** and the reduced with area **(6)** and/or the sealing strip **(1)** further comprises a second transition area **(11)** between the second high width area **(5)** and the reduced with area **(6),** wherein the first transition area **(10)** and the second transition area **(11)** are entirely in contact with the port seam part.

Preferably, in the *pressing step* the sealing strip **(1)** is formed to receive the port.

### Product

The invention further concerns a packaging, preferably a medical packaging, obtainable by the pulse sealing method according to the present invention.

Preferably, the packaging is filled with a liquid, preferably a medical or nutritional liquid.

### Use of the Sealing Strip

Finally, the present invention concerns the use of the sealing strip **(1)** or the sealing tool according to the present invention for producing a bag comprising a port.

## Claims

1. A sealing strip **(1)** for pulse sealing a port and film surfaces of a bag,
wherein the sealing strip **(1)** comprises a length **(2)** dimension and a width **(3)** dimension,
wherein the sealing strip **(1)** comprises a first high width area **(4)** and a second high width area **(5),**
and wherein the sealing strip **(1)** comprises a reduced width area **(6)** positioned between the first high width area **(4)** and the second high width area **(5),**
wherein the average width of the reduced width area **(6)** is lower than the average width of the first high width area **(4)** and/or lower than the average width of the second high width area **(5),** and
wherein the midpoint of the average width of the reduced width area **(6)** does not match a line **(7),** which is orthogonal to the average width of the first high width area **(4)** and which crosses the midpoint of the average width of the first high width area **(4),** and/or does not match a line **(8),** which is orthogonal to the average width of the second high width area **(5)** and which crosses the midpoint of the average width of the second high width area **(5).**

2. The sealing strip **(1)** according to claim 1, wherein the midpoint of the average width of the reduced width area **(6)** does not match a line **(7)** orthogonal to the average width of the first high width area **(4)** and crossing the midpoint of the average width of the first high width area **(4)** and does not match a line **(8)** orthogonal to the average width of the second high width area **(5)** and crossing the midpoint of the average width of the second high width area **(5).**

3. The sealing strip **(1)** according to claim 1 or 2, wherein the sealing strip **(1)** further comprises a first transition area **(10)** between the first high width area **(4)** and the reduced with area **(6)** and/or wherein the sealing strip **(1)** further comprises a second transition area **(11)** between the second high width area **(5)** and the reduced with area **(6).**

4. The sealing strip **(1)** according to claim 3, wherein the width of the first transition area **(10)** is linearly reduced, thereby forming at least one linear edge **(12)** of the first transition area **(10).**

5. The sealing strip **(1)** according to claim 4, wherein an angle **(13)** between the edge **(12)** of the first transition area **(10)** and a line parallel to an edge **(14)** of the reduced width area **(6)** is in the range of from 20 to 60°, preferably 25 to 55°, and more preferably 40 to 50°.

6. The sealing strip **(1)** according to claims 3 to 5, wherein the width of the second transition area **(11)** is linearly reduced, thereby forming at least one linear edge **(15)** of the first transition area **(10).**

7. The sealing strip **(1)** according to claim 6, wherein an angle **(16)** between the edge **(15)** of the second transition area **(11)** and a line parallel to an edge **(14)** of the reduced width area **(6)** is in the range of from 20 to 60°, preferably 25 to 55°, and more preferably 40 to 50°.

8. The sealing strip **(1)** according to any of the preceding claims 1 to 7, wherein the average width of the first high width area **(4)** and the width of the second high width area **(5)** have the same value.

9. The sealing strip **(1)** according to any of the preceding claims 1 to 8, wherein the line **(7)** orthogonal to the average width of the first high width area **(4)** and crossing the midpoint of the average width of the first high width area **(4)** is identical to the line **(8)** orthogonal to the average width of the second high width area **(5)** and the width of the second high width area **(5)** have the same value.

10. The sealing strip **(1)** according to claim 9, wherein the edges of the first **(3)** and the second high width area **(5)** matching an edge of the reduced width aera **(5)** match the same edge of the reduced width area **(6).**

11. The sealing strip **(1)** according to any of the preceding claims 1 to 10, wherein the average width of the reduced width area **(6)** is in the range of from 40 to 90% of the average width of the first **(3)** and/or second high width area **(5),** preferably 50 to 85%, more preferably 60 to 80%, even more preferably 65 to 75%, and most preferably 68 to 72%.

12. A sealing tool **(18)** for pulse sealing a port and film surfaces of a bag, the sealing tool **(18)** comprising two jaws **(19)** with a sealing strip **(1)** according to any of the preceding claims 1 to 11 extending along the jaw **(19).**

13. A use of the sealing strip **(1)** according to any of the preceding claims 1 to 11 or a sealing tool according to claims 12 for producing a bag comprising at least one port.

14. A pulse sealing method for pulse sealing film surfaces and a port of a packaging, wherein the method comprises the steps of:
- in a *positioning step* positioning a port between two films,
- in a *pressing step* pressing a jaw **(19)** comprising a sealing strip **(1)** according to any of the preceding claims 1 to 11 onto the films, whereby a part of the films is in direct contact with each other forming a film seam part and another part of the films is in indirect contact via the port with each other forming a port seam part,
- in a *heating step* heating the sealing strip **(1)** to seal the film seam part and the port seam part,
wherein the reduced width area **(6)** of the sealing strip **(1)** at least partially covers the port seam part and wherein the first high width area **(4)** and/or the second high width area **(5)** at least partially covers the film seam part.

15. A packaging, preferably medical packaging, obtainable by the method according to claim 14.
